(19) Europäisches Patentamt
European Patent Office
Office européen des brevets

(11) **EP 4 506 052 A1**

(12) **EUROPEAN PATENT APPLICATION**
published in accordance with Art. 153(4) EPC

(43) Date of publication:
**12.02.2025 Bulletin 2025/07**

(21) Application number: **23784607.6**

(22) Date of filing: **16.03.2023**

(51) International Patent Classification (IPC):
**B01D 39/20** (2006.01)    **D21H 27/08** (2006.01)

(52) Cooperative Patent Classification (CPC):
**B01D 39/16; B01D 39/20; D04H 1/4218;**
**D21H 13/40; D21H 19/20; D21H 27/08;**
**Y02A 50/2351**

(86) International application number:
**PCT/JP2023/010249**

(87) International publication number:
**WO 2023/195317 (12.10.2023 Gazette 2023/41)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **04.04.2022 JP 2022062263**

(71) Applicant: **Hokuetsu Corporation**
**Nagaoka-shi**
**Niigata 940-0027 (JP)**

(72) Inventors:
• **TASHIRO, Nozomi**
  **Nagaoka-shi, Niigata 940-0027 (JP)**
• **SATO, Masashi**
  **Nagaoka-shi, Niigata 940-0027 (JP)**

(74) Representative: **v. Bezold & Partner**
**Patentanwälte - PartG mbB**
**Ridlerstraße 57**
**80339 München (DE)**

(54) **FILTER MATERIAL FOR AIR FILTERS, AND METHOD FOR MANUFACTURING SAME**

(57)    An object of the present disclosure is to provide a filter medium, for an air filter, which contains no PFASs or siloxane compounds and has a good physical property balance among the PF value, the water repellency, and the strength. A filter medium, for an air filter, according to the present disclosure is a filter medium, for an air filter, composed of a wet-laid nonwoven fabric, the filter medium including a binder resin and a water repellent, wherein the water repellent contains, as a main component, an acrylic polymer free of fluorine and silicon in a molecule thereof. A method for producing a filter medium, for an air filter, according to the present disclosure includes a step of forming a sheet in a wet state by forming a slurry of fibers into the sheet by a wet papermaking method, a step of impregnating the sheet in the wet state with an aqueous dispersion that contains a binder resin and a water repellent containing, as a main component, an acrylic polymer free of fluorine and silicon in a molecule thereof, and a step of obtaining a dry sheet by heating and drying the sheet, in a wet state, impregnated with the aqueous dispersion.

EP 4 506 052 A1

## Description

### Technical Field

The present disclosure relates to a filter medium for an air filter used for an air filter installed in a clean room for a semiconductor, a liquid crystal, and food industry, a building air conditioner, an air purifier, or the like.

### Background Art

In order to collect and remove airborne particles of submicron or micron order, an air filter including a filter medium for an air filter is generally used. The air filter is classified into a coarse dust filter, a medium performance filter, a HEPA filter, an ULPA filter, and the like depending on size of collectable particles and the collection efficiency thereof. The above filters are enumerated in descending order of the size of collectable particles and in ascending order of the collection efficiency.

The filter medium for an air filter requires collection efficiency of particles that need collecting and a low pressure loss so as not to increase blowing energy. As an index value of the collection efficiency and the pressure loss, there is a PF value shown in Mathematical Formula 1; the higher this value is, the higher the collection efficiency is and the lower the pressure loss is, which indicates that the filter medium is more excellent.

[Mathematical Formula 1]

$$PF\ value = \frac{\log_{10}(Permeability\ [\%]/100)}{Pressure\ loss[Pa]/9.81} \times (-100)$$

Here, permeability [%] = 100 - collection efficiency [%]

Further, the filter medium for an air filter requires sufficient strength imparted thereto so as not to break or crack in processing or during ventilation use.

Further, as a physical property that the filter medium for an air filter requires, there is water repellency. Having sufficient water repellency can prevent problem occurring of pores of the filter medium blocked by water droplets under the condition of dew condensation due to a change in air temperature or of air with high humidity flowing therethrough. In addition, in a place close to the sea, it can prevent a deliquescence phenomenon, in which sea salt particles collected by the filter medium are liquefied by moisture in the air and then flow out. Meanwhile, when water repellency is low, there is a problem of permeation of a sealant, a hot melt, or the like, with which the filter medium is manufactured into an air filter unit.

In order to impart water repellency to a filter medium, a method of adhering a fluorine-based water repellent and/or a silicone-based water repellent (see, for example, PTL 1 or PTL 2.) is widely used.

Examples of the filter medium, using a water repellent other than fluorine-based and silicone-based water repellents, include a method using synthetic paraffin (see, for example, PTL 3) and a method using an alkyl ketene dimer (see, for example, PTL 4).

### Citation List

### Patent Literature

> PTL 1: JP H2-175997 A
> PTL 2: JP H9-225226 A
> PTL 3: WO 97/04851 A1
> PTL 4: WO 02/016005 A1

### Summary of Invention

### Technical Problem

However, in the technique disclosed in PTL 1 or PTL 2, since a perfluoroalkyl compound (hereinafter abbreviated as PFAS), constituting the fluorine-based water repellent, is hardly decomposable and has high bioaccumulation, there is a movement to regulate the use thereof worldwide. In addition, a siloxane compound, constituting the silicone-based water repellent, and a cyclic siloxane which is a condensate thereof have a problem of adhering to the surface of a semiconductor substrate or a glass substrate to cause a decrease in product yield or occurrence of cissing. Further, there is a movement to regulate the use of a cyclic siloxane because it is hardly decomposable and has high bioaccumulation like a PFAS.

In addition, neither method in the technique disclosed in PTL 3 nor PTL 4 is easy to achieve a physical property balance among the PF value, the strength, and the water repellency of the filter medium.

As described above, a filter medium for an air filter which contains no PFASs or siloxane compounds is necessary, but the conventional technique is difficult to produce a filter medium having a good physical property balance among the PF value, the water repellency, and the strength. Therefore, an object of the present disclosure is to provide a filter medium, for an air filter, which contains no PFASs or siloxane compounds and has a good physical property balance among the PF value, the water repellency, and the strength.

Solution to Problem

The present inventors have intensively conducted studies for achieving the above-mentioned object, and resultantly found that the above-mentioned object can be achieved by using a binder resin and a water repellent containing, as a main component, an acrylic polymer free of fluorine and silicon in a molecule thereof, and have completed the present invention. That is, a filter medium for an air filter according to the present invention is a filter medium, for an air filter, composed of a wet-laid nonwoven fabric, the filter medium including a binder resin and a water repellent, wherein the water repellent contains, as a main component, an acrylic polymer free of fluorine and silicon in a molecule thereof.

In the filter medium for an air filter according to the present invention, a solid content mass ratio between the binder resin and the water repellent is preferably 5 to 90 parts by mass of the water repellent, more preferably 30 to 90 parts by mass of the water repellent, still more preferably 40 to 90 parts by mass of the water repellent, and even more preferably 40 to 70 parts by mass of the water repellent, per hundred parts by mass of the binder resin. This ratio can bring about a filter medium having a good physical property balance among the PF value, the water repellency, and the strength.

In the filter medium for an air filter according to the present invention, the wet-laid nonwoven fabric preferably contains a glass fiber. According to such a configuration, a filter medium, for an air filter, having a higher PF value can be obtained.

In the filter medium for an air filter according to the present invention, the binder resin is preferably an acrylic binder resin.

In the filter medium for an air filter according to the present invention, the water repellent is preferably a cationic water repellent.

In the filter medium for an air filter according to the present invention, a total solid mass content of the binder resin and the water repellent in the filter medium is preferably 3 to 12% by mass with respect to the entire filter medium. This ratio can bring about a filter medium having a particularly good physical property balance between the PF value and the strength.

It is preferable that the filter medium for an air filter according to the present invention contain no crosslinking agents, and have a structure in which the binder resin binds fibers of the wet-laid nonwoven fabric together.

It is preferable that the filter medium for an air filter according to the present invention have a structure in which the water repellent adheres to fibers of the wet-laid nonwoven fabric.

It is preferable that the filter medium for an air filter according to the present invention have a structure in which the binder resin and the water repellent be crosslinked without interposing a crosslinking agent therebetween.

A method for producing a filter medium for an air filter according to the present invention includes a step of forming a sheet in a wet state by forming a slurry of fibers into a sheet by a wet papermaking method, a step of impregnating the sheet in the wet state with an aqueous dispersion that contains a binder resin and a water repellent containing, as a main component, an acrylic polymer free of fluorine and silicon in a molecule thereof, and a step of obtaining a dry sheet by heating and drying the sheet, in a wet state, impregnated with the aqueous dispersion. This production method is capable of producing a filter medium for an air filter which contains no PFASs or siloxane compounds and has a good physical property balance among the PF value, the water repellency, and the strength.

In the method for producing a filter medium for an air filter according to the present invention, the slurry of the fibers preferably contains a glass fiber. Such a production method can produce a filter medium for an air filter having a higher PF value.

In the method for producing a filter medium for an air filter according to the present invention, it is preferable that the binder resin be an acrylic binder resin, the aqueous dispersion contains no crosslinking agents, and the binder resin bind the fibers of the dry sheet together, and the water repellent adhere to the fibers of the dry sheet.

Advantageous Effects of Invention

According to the present disclosure, it is practical to obtain a filter medium, for an air filter, which contains no PFASs or siloxane compounds and has a good physical property balance among the PF value, the water repellency, and the strength.

Description of Embodiments

Next, the present invention will be described in detail with reference to embodiments, but the present invention is not construed as being limited to these descriptions. The embodiments may be variously modified as long as the effect of the present invention is exhibited.

The binder resin according to the present embodiment is used for binding the fibers of the nonwoven fabric together and imparting strength that the filter medium for an air filter requires. That is, it is preferable that the filter medium for an air filter according to the present embodiment contain no crosslinking agents, such as a polyisocyanate compound, and has a structure in which the binder resin binds the fibers of the wet-laid nonwoven fabric together. The component of the binder resin is selected from, for example, a polyacrylic acid ester resin, a polymethacrylic acid ester resin, a polystyrene resin, a polyvinyl acetate resin, a polyurethane resin, polyvinyl alcohol, and the like. The component is preferably an acrylic binder resin such as a polyacrylic acid ester resin or a polymethacrylic acid ester resin.

The water repellent according to the present embodiment is used for adhering to the fibers of the nonwoven fabric and then imparting water repellency that the filter medium for an air filter requires. The main component of the water repellent is an acrylic polymer free of fluorine and silicon in a molecule thereof (hereinafter, it may be simply referred to as the acrylic polymer). A content ratio of the acrylic polymer to the water repellent is 50% by mass or more, preferably 80% by mass or more, and more preferably 90% by mass or more. The acrylic polymer is a polymer obtained by polymerizing an acrylic acid ester or a methacrylic acid ester as a main raw material monomer. The acrylic polymer is synthesized from law material monomers of which the main raw material monomer accounts for 50% by mass or more, preferably accounts for 80% by mass or more, and more preferably accounts for 90% by mass or more. Examples of such a water repellent include Unidyne XF series (manufactured by Daikin Industries, Ltd.) composed essentially of the acrylic polymer, and the water repellent may be selected from these commercially available products. The water repellent may contain a trace amount of silicone, the ratio of which is about 50 to 150 ppm, as an additive.

The water repellent is preferably a cationic water repellent. When the water repellent is cationic, water repellency is further improved. In particular, provided that the wet-laid nonwoven fabric contains a glass fiber, the fixity of the water repellent to the glass fiber is easily improved, so that the water repellent tends to remain in the filter medium. Therefore, the water repellency is easily improved.

Provided that the binder resin and the water repellent are both an acrylic resin compound, the binder resin of the present embodiment is preferably an acrylic resin compound containing a polyacrylic acid ester synthesized from raw material monomers being acrylic acid ester or methacrylic acid ester of which a monomer having 8 or less carbon atoms of an ester moiety of acrylic acid ester or methacrylic acid ester accounts for the main (preferably accounts for 80% by mass or more, more preferably accounts for 90% by mass or more). When the number of carbon atoms in the ester moiety is more than 8, adhesive strength may be difficult to be obtained.

Further, the water repellent of the present embodiment is preferably an acrylic resin compound containing a polyacrylic acid ester synthesized from raw material monomers being acrylic acid ester or methacrylic acid ester of which a monomer having more than 8 carbon atoms of an ester moiety of acrylic acid ester or methacrylic acid ester accounts for the main (preferably accounts for 80% by mass or more, more preferably accounts for 90% by mass or more in the acrylic acid ester or the methacrylic acid ester). Here, in the water repellent, the ester moiety is preferably a hydrocarbon group. This hydrocarbon group may be linear or branched, or may be a saturated hydrocarbon or an unsaturated hydrocarbon, and further may have an alicyclic or aromatic ring. Among them, a linear group is preferable, and a linear alkyl group is more preferable. The number of carbon atoms of the above-mentioned ester moiety is preferably 9 or more, and more preferably 12 or more. When the number of carbon atoms is 8 or less, sufficient water repellency as a water repellent treatment agent may not be able to be exhibited.

In the present embodiment, the solid content mass ratio between the binder resin and the water repellent (binder resin/water repellent) is preferably 5 to 90 parts by mass of the water repellent, more preferably 30 to 90 parts by mass of the water repellent, still more preferably 40 to 90 parts by mass of the water repellent, and even more preferably 40 to 70 parts by mass of the water repellent, per hundred parts by mass of the binder resin. This ratio can bring about a filter medium having a good physical property balance among the PF value, the water repellency, and the strength. When the mass ratio is less than 30 parts by mass of the water repellent, substantial water repellency may not be obtained. Meanwhile, when the mass ratio is more than 90 parts by mass of the water repellent, sufficient strength may not be obtained, and a sufficient PF value may not be obtained.

In the present embodiment, the total solid mass content of the binder resin and the water repellent in the filter medium is preferably 3 to 12% by mass with respect to the entire filter medium. The total content is more preferably 4 to 10% by mass. When the total content of these components is less than 3% by mass, sufficient water repellency and strength may not be obtained. Meanwhile, when the total content is more than 12% by mass, a sufficient PF value may not be obtained.

The filter medium for an air filter according to the present embodiment preferably has water repellency with a water column height of 300 mm or more, and more preferably has water repellency with a water column height of 508 mm or more.

In the filter medium for an air filter according to the present embodiment, the tensile strength of the filter medium alone is preferably 0.30 kN/m or more, and more preferably 0.40 kN/m or more.

In the present embodiment, the binder resin and the water repellent are provided by impregnating the wet-laid nonwoven fabric in a wet state with an aqueous dispersion in which each ingredient is mixed, and are then dried and crosslinked by heating the wet-laid nonwoven fabric. In this regard, a multi-cylinder dryer, a Yankee dryer, a hot air dryer, or the like is used in a paper machine, or a rotary dryer, a circulation dryer, or the like is used in a hand paper machine, as a heating method. The heating temperature is 80 to 180°C, and more preferably 100 to 160°C.

In the present embodiment, an additive such as an antifoaming agent can be appropriately added to the aqueous dispersion used for impregnation as long as the effect of the present invention is not impaired.

The wet-laid nonwoven fabric according to the present embodiment preferably contains a glass fiber. Since a glass fiber has high stiffness, voids in the filter medium which air to pass therethrough requires can be sufficiently retained, and a high PF value can be obtained. As the glass fiber, a glass wool fiber, a chopped glass fiber, or the like can be used.

In the present embodiment, the average fiber diameter of the glass fiber is not particularly limited, but is preferably 0.1 to 10 $\mu$m, and more preferably 0.2 to 7 $\mu$m. This range brings about a filter medium having a good balance between the pressure loss and the collection efficiency, that is, a high PF value. Further, two or more types of glass fibers having different average fiber diameters may be incorporated. In order to obtain higher collection efficiency, it is preferable that the glass fibers be at least partially composed of a glass fiber having a fiber diameter of less than 1 $\mu$m.

In the present embodiment, fibers other than the glass fiber may be used as fibers contained in the wet-laid nonwoven fabric. Examples of these fibers include natural fibers such as wood pulp; regenerated fibers such as a rayon fiber; and synthetic fibers such as a polyolefin fiber, a polyurethane fiber, and a vinylon fiber. The blending amount of these fibers is preferably set within a range that does not impair the effect of increasing the PF value of the glass fiber. For example, the blending amount accounts for 30% by mass or less, more preferably accounts for 20% by mass or less, and still more preferably accounts for 10% by mass or less of the entire fibers.

In a production process of producing the filter medium for an air filter according to the present embodiment, a raw material fiber is dispersed in water to obtain a raw material slurry, and the raw material slurry is formed into a sheet by a wet papermaking method to obtain the sheet in a wet state. Provided that a large amount of the glass fibers are used as the raw material fiber, water used for dispersion and papermaking is preferably acidic, and more preferably has a pH of 2 to 4. By performing dispersion and papermaking under acidic conditions, the glass fibers are easily bound together, and strength can be increased.

Examples

Hereinafter, the present invention will be described with reference to specific examples, but the present invention is not limited to these descriptions. Note that the unit "part(s)" in examples indicates a solid mass ratio of fibers in a raw material slurry or a solid content mass ratio of an ingredient in an impregnation liquid, and the total amount of all fibers in the raw material slurry is set to 100 parts and the amount of the binder resin in the impregnation liquid is set to 100 parts. Further, in the examples, "%" indicates the solid mass content of an ingredient in the filter medium.

<Example 1>

In a table disintegrator, 60 parts of glass wool having an average fiber diameter of 0.65 $\mu$m (B-06-F, manufactured by Unifrax Co.), 30 parts of glass wool having an average fiber diameter of 2.44 $\mu$m (B-26-R, manufactured by Unifrax Co.), and 10 parts of a chopped glass fiber having an average fiber diameter of 6 $\mu$m and a cut length of 6 mm (EC-6-6-SP, manufactured by Unifrax Co.) were disintegrated using acidic water having a pH of 3.0 to obtain a raw material slurry. Subsequently, the raw material slurry was subjected to papermaking to obtain a wet-laid nonwoven fabric. Further, the wet-laid nonwoven fabric was impregnated with an impregnation liquid, prepared by mixing 100 parts of an acrylic binder resin (VONCOAT AN-1190S, manufactured by DIC Corporation), 20 parts of a cationic acrylic water repellent containing, as a main component, an acrylic polymer free of fluorine and silicon in a molecule thereof (Unidyne XF-4001, manufactured by Daikin Industries, Ltd.) and water, was dried with a rotary dryer at 130°C (drying time: 2 minutes), and was then further heated with a dryer at 160°C for 2 minutes to obtain a filter medium for an air filter having a basis weight of 70 g/m$^2$. The content of the impregnation ingredients in the filter medium was 5.1%.

<Example 2>

A filter medium for an air filter having a basis weight of 70 g/m$^2$ was obtained in the same manner as the filter medium in Example 1, except that an impregnation liquid, prepared by mixing 100 parts of an acrylic binder resin (VONCOAT AN-1190S, manufactured by DIC Corporation), 30 parts of a cationic acrylic water repellent containing, as a main component, an acrylic polymer free of fluorine and silicon in a molecule thereof (Unidyne XF-4001, manufactured by Daikin Industries, Ltd.) and water, was used. The content of the impregnation ingredients in the filter medium was 5.2%.

<Example 3>

A filter medium for an air filter having a basis weight of 70 g/m$^2$ was obtained in the same manner as the filter medium in Example 1, except that an impregnation liquid, prepared by mixing 100 parts of an acrylic binder resin (VONCOAT AN-1190S, manufactured by DIC Corporation), 40 parts of a cationic acrylic water repellent containing, as a main component, an acrylic polymer free of fluorine and silicon in a molecule thereof (Unidyne XF-4001, manufactured by Daikin Industries, Ltd.) and water, was used. The content of the impregnation ingredients in the filter medium was 5.1%.

<Example 4>

A filter medium for an air filter having a basis weight of 70 g/m$^2$ was obtained in the same manner as the filter medium in Example 1, except that an impregnation liquid, prepared by mixing 100 parts of an acrylic binder resin (VONCOAT AN-1190S, manufactured by DIC Corporation), 50 parts of a cationic acrylic water repellent containing, as a main component, an acrylic polymer free of fluorine and silicon in a molecule thereof (Unidyne XF-4001, manufactured by Daikin Industries, Ltd.) and water, was used. The content of the impregnation ingredients in the filter medium was 5.4%.

<Example 5>

A filter medium for an air filter having a basis weight of 70 g/m$^2$ was obtained in the same manner as the filter medium in Example 1, except that an impregnation liquid, prepared by mixing 100 parts of an acrylic binder resin (VONCOAT AN-1190S, manufactured by DIC Corporation), 70 parts of a cationic acrylic water repellent containing, as a main component, an acrylic polymer free of fluorine and silicon in a molecule thereof (Unidyne XF-4001, manufactured by Daikin Industries, Ltd.) and water, was used. The content of the impregnation ingredients in the filter medium was 5.3%.

<Example 6>

A filter medium for an air filter having a basis weight of 70 g/m$^2$ was obtained in the same manner as the filter medium in Example 1, except that an impregnation liquid, prepared by mixing 100 parts of an acrylic binder resin (VONCOAT AN-1190S, manufactured by DIC Corporation), 90 parts of a cationic acrylic water repellent containing, as a main component, an acrylic polymer free of fluorine and silicon in a molecule thereof (Unidyne XF-4001, manufactured by Daikin Industries, Ltd.) and water, was used. The content of the impregnation ingredients in the filter medium was 5.2%.

<Example 7>

A filter medium for an air filter having a basis weight of 70 g/m$^2$ was obtained in the same manner as the filter medium in Example 1, except that an impregnation liquid, prepared by mixing 100 parts of an acrylic binder resin (VONCOAT AN-1190S, manufactured by DIC Corporation), 100 parts of a cationic acrylic water repellent containing, as a main component, an acrylic polymer free of fluorine and silicon in a molecule thereof (Unidyne XF-4001, manufactured by Daikin Industries, Ltd.) and water, was used. The content of the impregnation ingredients in the filter medium was 5.2%.

<Example 8>

A filter medium for an air filter having a basis weight of 70 g/m$^2$ was obtained in the same manner as the filter medium in Example 1, except that an impregnation liquid, prepared by mixing 100 parts of an acrylic binder resin (VONCOAT AN-1190S, manufactured by DIC Corporation), 40 parts of a cationic acrylic water repellent containing, as a main component, an acrylic polymer free of fluorine and silicon in a molecule thereof (Unidyne XF-4001, manufactured by Daikin Industries, Ltd.) and water, was used. Since the conditions for adding the impregnation liquid to the wet paper by impregnation were adjusted, the content of the impregnation ingredients in the filter medium was 3.0%.

<Example 9>

A filter medium for an air filter having a basis weight of 70 g/m² was obtained in the same manner as the filter medium in Example 1, except that an impregnation liquid, prepared by mixing 100 parts of an acrylic binder resin (VONCOAT AN-1190S, manufactured by DIC Corporation), 40 parts of a cationic acrylic water repellent containing, as a main component, an acrylic polymer free of fluorine and silicon in a molecule thereof (Unidyne XF-4001, manufactured by Daikin Industries, Ltd.) and water, was used. Since the conditions for adding the impregnation liquid to the wet paper by impregnation were adjusted, the content of the impregnation ingredients in the filter medium was 12.1%.

<Example 10>

A filter medium for an air filter having a basis weight of 70 g/m² was obtained in the same manner as the filter medium in Example 1, except that an impregnation liquid, prepared by mixing 100 parts of an acrylic binder resin (VONCOAT AN-1190S, manufactured by DIC Corporation), 5 parts of a cationic acrylic water repellent containing, as a main component, an acrylic polymer free of fluorine and silicon in a molecule thereof (Unidyne XF-4001, manufactured by Daikin Industries, Ltd.) and water, was used. The content of the impregnation ingredients in the filter medium was 5.2%.

<Example 11>

A filter medium for an air filter having a basis weight of 70 g/m² was obtained in the same manner as the filter medium in Example 1, except that an impregnation liquid, prepared by mixing 100 parts of an acrylic binder resin (VONCOAT AN-1190S, manufactured by DIC Corporation), 10 parts of a cationic acrylic water repellent containing, as a main component, an acrylic polymer free of fluorine and silicon in a molecule thereof (Unidyne XF-4001, manufactured by Daikin Industries, Ltd.) and water, was used. The content of the impregnation ingredients in the filter medium was 5.2%.

<Comparative Example 1>

A filter medium for an air filter having a basis weight of 70 g/m² was obtained in the same manner as the filter medium in Example 1, except that the impregnation process was omitted.

<Comparative Example 2>

A filter medium for an air filter having a basis weight of 70 g/m² was obtained in the same manner as the filter medium in Example 1, except that an impregnation liquid, prepared by mixing 100 parts of an acrylic binder resin (VONCOAT AN-1190S, manufactured by DIC Corporation) and water, was used. The content of the impregnation ingredients in the filter medium was 5.4%.

<Comparative Example 3>

A filter medium for an air filter having a basis weight of 70 g/m² was obtained in the same manner as the filter medium in Example 1, except that an impregnation liquid, prepared by mixing 100 parts of an acrylic binder resin (VONCOAT AN-1190S, manufactured by DIC Corporation), 20 parts of an alkyl ketene dimer (SE2380, manufactured by Seiko PMC Corporation) and water, was used. The content of the impregnation ingredients in the filter medium was 5.3%.

<Comparative Example 4>

A filter medium for an air filter having a basis weight of 70 g/m² was obtained in the same manner as the filter medium in Example 1, except that an impregnation liquid, prepared by mixing 100 parts of an acrylic binder resin (VONCOAT AN-1190S, manufactured by DIC Corporation), 20 parts of a paraffin wax-based water repellent (Petrox P-200, manufactured by Meisei Chemical Works, Ltd.) and water, was used. The content of the impregnation ingredients in the filter medium was 5.4%.

<Comparative Example 5>

A filter medium for an air filter having a basis weight of 70 g/m² was obtained in the same manner as the filter medium in Example 1, except that an impregnation liquid, prepared by mixing 100 parts of an acrylic binder resin (VONCOAT AN-1190S, manufactured by DIC Corporation), 20 parts of a fluorine-based water repellent (AsahiGuard AG-E300, manufactured by AGC Inc.) and water, was used. The content of the impregnation ingredients in the filter medium was 5.4%.

<Comparative Example 6>

A filter medium for an air filter having a basis weight of 70 g/m$^2$ was obtained in the same manner as the filter medium in Example 1, except that an impregnation liquid, prepared by mixing 100 parts of a cationic acrylic water repellent containing, as a main component, an acrylic polymer free of fluorine and silicon in a molecule thereof (Unidyne XF-4001, manufactured by Daikin Industries, Ltd.) and water, was used. The content of the impregnation ingredients in the filter medium was 2.5%.

Evaluation of the filter media for an air filter obtained in examples and comparative examples was performed using the following methods.

<Pressure loss>

The pressure loss was measured as a differential pressure produced by passage of air through the filter medium for an air filter having an effective area of 100 cm$^2$ at a surface wind speed of 5.3 cm/sec, using a manometer (Manostar Gauge WO81, manufactured by Yamamoto Electric Works Co., Ltd.).

<Permeability>

The number of upstream and downstream polydispersed polyalphaolefin (PAO) particles, under the condition of passage of air with PAO particles generated with a Laskin nozzle through the filter medium for an air filter having an effective area of 100 cm$^2$ at a surface wind speed of 5.3 cm/sec, was measured using a laser particle counter (KC-22B, manufactured by RION Co., Ltd.), and the permeability was determined from the ratio between the number of upstream particles and the number of downstream particles. The target particle size was set to 0.10 to 0.15 $\mu$m and 0.30 $\mu$m.

<PF value>

The PF value was calculated from the values of the pressure loss and the particle permeability, using the formula shown in Mathematical Formula 1. The target particle size was set to 0.10 to 0.15 $\mu$m and 0.30 $\mu$m.

<Tensile strength>

The tensile strength was measured using Autograph AGX-S (manufactured by SHIMADZU CORPORATION) under the conditions of a test width of 1 inch, a test length of 100 mm, and a tensile speed of 15 mm/min.

<Water repellency>

The water repellency was measured in accordance with MIL-STD-282.

The results of evaluation of the filter media for an air filter performed by the above-mentioned methods are shown in Table 1 and Table 2.

[Table 1]

| | | Example 1 | Example 2 | Example 3 | Example 4 | Example 5 | Example 6 | Example 7 | Example 8 | Example 9 |
|---|---|---|---|---|---|---|---|---|---|---|
| Binder resin | | Acrylic | Acrylic | Acrylic | Acrylic | Acrylic | Acrylic | Acrylic | Acrylic | Acrylic |
| Water repellent | | Acrylic | Acrylic | Acrylic | Acrylic | Acrylic | Acrylic | Acrylic | Acrylic | Acrylic |
| Content of impregnation ingredients in filter medium | [%] | 5.1 | 5.2 | 5.1 | 5.4 | 5.3 | 5.2 | 5.2 | 3.0 | 12.1 |
| Binder resin/water repellent | [Part(s)] | 100/20 | 100/30 | 100/40 | 100/50 | 100/70 | 100/90 | 100/100 | 100/40 | 100/40 |
| Pressure loss | [Pa] | 262 | 272 | 276 | 280 | 282 | 282 | 284 | 264 | 330 |
| Permeability regarding 0.10 to 0.15 $\mu$m | [%] | 0.1452 | 0.1412 | 0.1497 | 0.1465 | 0.1639 | 0.1762 | 0.1719 | 0.1914 | 0.1096 |
| PF value regarding 0.10 to 0.15 $\mu$m | [-] | 10.63 | 10.28 | 10.04 | 9.93 | 9.69 | 9.58 | 9.55 | 10.10 | 8.80 |
| Permeability regarding 0.30 $\mu$m | [%] | 0.0112 | 0.0089 | 0.0094 | 0.0108 | 0.0146 | 0.0173 | 0.0174 | 0.0142 | 0.0064 |
| PF value regarding 0.30 $\mu$m | [-] | 14.79 | 14.61 | 14.31 | 13.90 | 13.34 | 13.09 | 12.99 | 14.30 | 12.47 |
| Water repellency | [mm water column height] | 290 | 370 | 510 | 700 | 980 | 1160 | 1280 | 320 | 600 |
| Tensile strength | [kN/m] | 0.85 | 0.78 | 0.73 | 0.65 | 0.46 | 0.32 | 0.27 | 0.48 | 1.00 |

[Table 2]

| | | Example 10 | Example 11 | Comparative Example 1 | Comparative Example 2 | Comparative Example 3 | Comparative Example 4 | Comparative Example 5 | Comparative Example 6 |
|---|---|---|---|---|---|---|---|---|---|
| Binder resin | | Acrylic | Acrylic | - | Acrylic | Acrylic | Acrylic | Acrylic | - |
| Water repellent | | Acrylic | Acrylic | - | - | Alkyl ketene dimer | Paraffin wax | Fluorine-based | Acrylic |
| Content of impregnation ingredients in filter medium | [%] | 5.2 | 5.2 | 0 | 5.4 | 5.3 | 5.4 | 5.4 | 2.5 |
| Binder resin/water repellent | [Part (s)] | 100/5 | 100/10 | 0/0 | 100/0 | 100/20 | 100/20 | 100/20 | 0/100 |
| Pressure loss | [Pa] | 265 | 264 | 244 | 267 | 283 | 280 | 272 | 226 |
| Permeability regarding 0.10 to 0.15 $\mu$m | [%] | 0.1303 | 0.1361 | 0.1912 | 0.1261 | 0.1916 | 0.1830 | 0.0944 | 0.1683 |
| PF value regarding 0.10 to 0.15 $\mu$m | [-] | 10.68 | 10.65 | 10.93 | 10.65 | 9.10 | 9.59 | 10.91 | 12.04 |
| Permeability regarding 0.30 $\mu$m | [%] | 0.0110 | 0.0107 | 0.0210 | 0.0107 | 0.0190 | 0.0142 | 0.0073 | 0.0160 |
| PF value regarding 0.30 $\mu$m | [-] | 14.65 | 14.75 | 14.79 | 14.59 | 12.80 | 13.48 | 14.92 | 16.48 |
| Water repellency | [mm water column height] | 120 | 200 | 0 | 0 | 790 | 120 | 870 | 1300 |
| Tensile strength | [kN/m] | 1.02 | 0.92 | 0.13 | 1.21 | 0.88 | 0.80 | 0.74 | 0.14 |

In Examples 1 to 11, the PF value regarding 0.10 to 0.15 $\mu$m was 8.80 or more, and the PF value regarding 0.30 $\mu$m was 12.47 or more satisfactorily. In Examples 1 to 9, the water repellency value satisfied a water column height of 290 mm or more. In Example 11, the water repellency value satisfied a water column height of 200 mm or more.

The comparison between Examples 1 to 11 and Comparative Example 2 verified that the use of a water repellent imparted water repellency: Example 10 exhibited a practical lower limit water repellency value of a water column height of 100 mm or more, Example 11 exhibited a water repellency value (a water column height of 200 mm) which is higher than that of Example 10 and better than the practical lower limit, Example 1 exhibited a water repellency value causing no problem in a practical use (a water column height of 290 mm or more), Examples 2 and 8 exhibited a practically preferable water repellency value (a water column height of 300 mm or more), and Examples 3 to 7 and 9 satisfied a practically more preferable water repellency value (a water column height of 508 mm or more).

The comparison between Examples 1 to 11 and Comparative Examples 1 and 6 verified that the use of a binder resin imparted tensile strength: Example 7 exhibited a tensile strength value causing no problem in a practical use (0.27 kN/m or more), Example 6 exhibited a practically preferable tensile strength value (0.30 kN/m or more), and Examples 1 to 5 and 8 to 11 satisfied a practically more preferable tensile strength value (0.40 kN/m or more).

The comparison between Examples 1 to 7 and Comparative Examples 3 and 4 verified that the present invention produced a filter medium having a good physical property balance between the PF value and the water repellency in comparison with a case where other non-fluorine-based water repellents are used. That is, in Examples 1 to 7, the PF value regarding 0.10 to 0.15 $\mu$m was 9.55 or more, the PF value regarding 0.30 $\mu$m was 12.99 or more satisfactorily, the water repellency value satisfied a water column height of 290 mm or more, and a filter medium having a good physical property balance was obtained.

**Claims**

1. A filter medium, for an air filter, composed of a wet-laid nonwoven fabric, the filter medium comprising

    a binder resin and a water repellent, wherein
    the water repellent contains, as a main component, an acrylic polymer free of fluorine and silicon in a molecule thereof.

2. The filter medium for an air filter according to claim 1, wherein a solid mass ratio between the binder resin and the water repellent is 5 to 90 parts by mass of the water repellent per hundred parts by mass of the binder resin.

3. The filter medium for an air filter according to claim 1, wherein a solid mass ratio between the binder resin and the water repellent is 30 to 90 parts by mass of the water repellent per hundred parts by mass of the binder resin.

4. The filter medium for an air filter according to claim 1, wherein a solid mass ratio between the binder resin and the water repellent is 40 to 90 parts by mass of the water repellent per hundred parts by mass of the binder resin.

5. The filter medium for an air filter according to claim 1, wherein a solid mass ratio between the binder resin and the water repellent is 40 to 70 parts by mass of the water repellent per hundred parts by mass of the binder resin.

6. The filter medium for an air filter according to claim 1, wherein the wet-laid nonwoven fabric contains a glass fiber.

7. The filter medium for an air filter according to claim 1, wherein the binder resin is an acrylic binder resin.

8. The filter medium for an air filter according to claim 1, wherein the water repellent is a cationic water repellent.

9. The filter medium for an air filter according to claim 1, wherein a total solid mass content of the binder resin and the water repellent in the filter medium is 3 to 12% by mass with respect to the entire filter medium.

10. The filter medium for an air filter according to claim 1, wherein the filter medium contains no crosslinking agents, and the binder resin binds fibers of the wet-laid nonwoven fabric together.

11. The filter medium for an air filter according to claim 1, wherein the water repellent adheres to fibers of the wet-laid nonwoven fabric.

12. The filter medium for an air filter according to claim 1, wherein the binder resin and the water repellent are crosslinked without interposing a crosslinking agent therebetween.

13. A method for producing a filter medium for an air filter, comprising:

a step of forming a sheet in a wet state by forming a slurry of fibers into the sheet by a wet papermaking method;
a step of impregnating the sheet in the wet state with an aqueous dispersion that contains a binder resin and a water repellent containing, as a main component, an acrylic polymer free of fluorine and silicon in a molecule thereof; and
a step of obtaining a dry sheet by heating and drying the sheet, in a wet state, impregnated with the aqueous dispersion.

14. The method for producing a filter medium for an air filter according to claim 13, wherein the slurry of the fibers contains a glass fiber.

15. The method for producing a filter medium for an air filter according to claim 13, wherein

the binder resin is an acrylic binder resin,
the aqueous dispersion contains no crosslinking agents, and
the binder resin binds the fibers of the dry sheet together, and
the water repellent adheres to the fibers of the dry sheet.

## INTERNATIONAL SEARCH REPORT

| International application No. |
|---|
| **PCT/JP2023/010249** |

### A. CLASSIFICATION OF SUBJECT MATTER

*B01D 39/20*(2006.01)i; *D21H 27/08*(2006.01)i
FI:   B01D39/20 B; D21H27/08

According to International Patent Classification (IPC) or to both national classification and IPC

### B. FIELDS SEARCHED

Minimum documentation searched (classification system followed by classification symbols)

B01D39/00-41/04; 46/00-46/90; D06M13/00-15/715; D21H27/08; C03C25/00-25/70

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 9-225226 A (HOKUETSU PAPER MILLS LTD) 02 September 1997 (1997-09-02) claim 1, paragraph [0018] | 1-9, 11, 13-14 |
| A | | 10, 12, 15 |
| Y | JP 2019-026747 A (DAIKIN IND LTD) 21 February 2019 (2019-02-21) claim 1, paragraphs [0006], [0083] | 1-9, 11, 13-14 |
| Y | JP 2015-120895 A (DAIKIN IND LTD) 02 July 2015 (2015-07-02) claims 1, 4, 6, paragraphs [0005], [0065] | 1-9, 11, 13-14 |
| Y | JP 2015-172198 A (DAIKIN IND LTD) 01 October 2015 (2015-10-01) claims 1, 4-6, paragraphs [0005], [0075] | 1-9, 11, 13-14 |
| P, A | JP 7055261 B1 (HOKUETSU CORP) 15 April 2022 (2022-04-15) entire text | 1-15 |
| A | JP 2011-062643 A (HOKUETSU KISHU PAPER CO LTD) 31 March 2011 (2011-03-31) entire text, all drawings | 1-15 |

☑ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 May 2023** | **30 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT

International application No.

**PCT/JP2023/010249**

### C. DOCUMENTS CONSIDERED TO BE RELEVANT

| Category* | Citation of document, with indication, where appropriate, of the relevant passages | Relevant to claim No. |
|---|---|---|
| A | JP 2017-060932 A (HOKUETSU KISHU PAPER CO LTD) 30 March 2017 (2017-03-30) entire text | 1-15 |

Form PCT/ISA/210 (second sheet) (January 2015)

14

INTERNATIONAL SEARCH REPORT
Information on patent family members

International application No.

**PCT/JP2023/010249**

| Patent document cited in search report | | | Publication date (day/month/year) | Patent family member(s) | | | Publication date (day/month/year) |
|---|---|---|---|---|---|---|---|
| JP | 9-225226 | A | 02 September 1997 | (Family: none) | | | |
| JP | 2019-026747 | A | 21 February 2019 | (Family: none) | | | |
| JP | 2015-120895 | A | 02 July 2015 | WO | 2015/076348 | A1 | |
| | | | | claims 1, 4, 6, paragraphs [0005], [0065] | | | |
| | | | | CN | 105765025 | A | |
| | | | | KR 10-2016-0076527 | | A | |
| JP | 2015-172198 | A | 01 October 2015 | WO | 2015/076347 | A1 | |
| | | | | claims 1, 4-6, paragraphs [0005], [0075] | | | |
| | | | | CN | 105745272 | A | |
| | | | | KR 10-2016-0076525 | | A | |
| JP | 7055261 | B1 | 15 April 2022 | (Family: none) | | | |
| JP | 2011-062643 | A | 31 March 2011 | (Family: none) | | | |
| JP | 2017-060932 | A | 30 March 2017 | (Family: none) | | | |

Form PCT/ISA/210 (patent family annex) (January 2015)

**15**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H2175997 A
- JP H9225226 A
- WO 9704851 A1
- WO 02016005 A1